# EUROPEAN PATENT APPLICATION

(11) **EP 4 722 995 A1**
(43) Date of publication of application: **08.04.2026**
(21) Application number: 24203916.2
(22) Date of filing: 01.10.2024
(51) Int. Cl.: G06N 20/00

(54) **METHOD FOR AUTOMATIC RETRAINING OF A GENERATIVE AI MODEL**

(71) Applicant: Siemens Aktiengesellschaft, 80333 München (DE)
(72) Inventor: Körner, Christian, 83346 Bergen (DE); Plösch, Reinhold, 4040 Linz (AT); Tang, Yongjian, 80636 München (DE)
(74) Representative: Siemens Patent Attorneys

(57) **Abstract**

The invention relates to a computer-implemented method and corresponding systems for maintain interconnected hierarchical models using a continuously optimized generative Al model within a multi-user system. The method involves the automatic collection and classification of change data sets of the hierarchical model, which are used to re-train the generative Al model. The decision to retrain the generative Al model based on the change data set, considers both the efficiency of re-training and Al models quality in proving recommendations for the maintenance tasks of the hierarchical model.

## Description

The present invention relates to computer-implemented method for maintaining hierarchical quality models using a generative AI model. Moreover, the invention relates to a system for maintaining the quality of a generative AI model. Further, the invention relates to a computer program product comprising a program code for executing a method for maintaining the quality of a generative AI model.

The use of large interconnected hierarchical models has increased in the last years. Such large interconnected hierarchical models require maintenance as the models have an operationalization that needs continuous improvement and change. Examples of such models include quality models, error trees, cost models, value models, cost center models, profit (revenue) center models, etc.

These models are typically unbalanced, i.e., there are parts of the hierarchical model that are highly populated with data and other parts of the tree that are sparsely populated. Maintaining typically means to judge where an information belongs to in the hierarchy, which can hardly be solved manually with thousands of elements in the hierarchical structure. The problem is to find the proper "place" for an element in the hierarchy. A system implementing or using such a model must be able to suggest a correct position that depends on the probability of the placement.

However, there is a constant change in the operationalization. Constant use of the models leads to a refinement of the description of the structural elements of the hierarchy of the model. This could be the description of a system quality attribute (which is a structural element) or of a quality metric (which is a leaf element in the hierarchy). Typically, new leaf elements (e.g., by introducing a new static code analysis tool, this often amounts to 100+ leaf elements) must be added to the hierarchical model. These changes require that an underlying generative AI model (GenAl model) helps in classifying new quality model elements has to be evolved.

Other causes for changes during operation or use are branches of the models which are added or removed. Constant use of the model leads to frequent changes of the structure, e.g., splitting a hierarchy, aggregation of elements into new hierarchy elements, deleting branches and moving the lower-level elements to other parts of the hierarchy, etc.

Further changes occur as the knowledge base is updated: Data, relevant for the hierarchy (e.g., quality attributes or quality metrics) are changed by third-party authorities (e.g., tool vendors). As this basic data is distributed over the entire hierarchy, it has to be assured that the externally provided data (for example third party data) and the knowledge base for the hierarchical model always is synchronized.

Another challenge arises due to scale and performance issues: Large models have thousands of elements that have to be maintained and the effort for re-training the underlying generative AI model is high.

Thus, round trip maintenance with assurance of operational and model quality observing energy efficiently especially with respect to "GenAl-Model" training would be required. Until now, GenAl model experts have to manually try whether new or changed data leads to better GenAl systems (i.e., systems using a generative AI model). Without any knowledge what was changed, which amount of data was changed, what type of change was done, there only remains to try out whether a re-training leads to a better model quality.

Thus, it is one object of the present invention to provide a possibility of an automatic re-training of a generative AI model for optimizing the generative AI model without manual involvement.

The objectives of the invention are solved by the independent claims. Further advantageous arrangements and embodiments of the invention are set forth in the respective dependent claims.

According to a first aspect, a computer-implemented method for maintaining the quality of a generative AI model is provided. The method comprises:
- collecting changes of a hierarchical model being based on the generative AI model,
- evaluating, after each change, an impact of the change on the quality of the generative AI model,
- re-training the generative AI model based on the collected changes and the result of the evaluation,
- testing the quality of the re-trained generative AI model, and
- releasing the re-trained generative AI model when the tested quality of the generative AI model fulfills a predefined training goal.

The hierarchical model using the generative AI model may be any kind of hierarchal model. As an example, the hierarchical model may be a quality model for software written in a higher-level programming language. Operationalization of such a quality model is usually achieved by using static and dynamic code analysis tools. As these tools undergo frequent revisions, the quality model and thus the underlying generative AI model need to be updated with the new version of these tools. Other examples are cost, and value models used by controllers of project managers, efficiency model uses to observe cloud centers or event cascades (hierarchical models) in Scada systems for supervision of automate building or manufacturing systems, etc.

When changes are made to the hierarchical model, for example by adding or removing elements as described above, the method detects and collects these changes. Every time, a change occurs, the change is evaluated in order to identify whether the change has an impact on the quality of the generative AI model. An impact in this context means whether a change of the underlying generative AI model corresponding to the change of the hierarchical model would lead to a lower or better quality of the generative AI model or has no impact at all.

When the method determines that the collected changes have an impact on the generative AI model, the generative AI model will be re-trained. After re-training of the generative AI model, the re-trained generative AI model will be tested automatically with respect to its quality and only in case the quality fulfills a predefined training goal, i.e., fulfills a predefined quality, the retrained generative AI model will be release for further use.

Thus, the described method provides a solution for a generative AI model and generative AI knowledge base that grows with the hierarchical model (e.g., the quality model) and its operationalization. Using the method, the generative AI model uses not only its standard algorithms for classifying new elements, but the method also supervises the changes made to the hierarchy and decides automatically when to re-train the generative AI model. As retraining needs time and computing resources, retraining only takes place when it can be judged that the re-trained model will likely perform better. As will be explained in further detail below, the method may optionally also automatically decide whether the retrained model behaves at least as good as before the change.

According to an embodiment, re-training the generative AI model comprises adjusting training meta-parameters and general parameters of the generative AI model. Such parameters may be for example number of hierarchical elements added, number of hierarchical elements deleted, number of hierarchical elements changed, amount of text changes in hierarchical elements, number of leaf elements added, number of leaf elements deleted, number of leaf elements changed, amount of text changes in hierarchical elements, distance of changes in case of moved hierarchical or leaf elements. Any other kind of parameters may also be adjusted. Based on these adjusted training parameters, the generative AI model is re-trained, resulting in the retrained generative AI model.

According to a further embodiment, testing the re-trained generative AI model comprises defining the technical training goal for the re-trained generative AI model, wherein the predefined technical training goal is particularly quantified into a set of quality metrics. This means that the training goal may be split into sub training goals, each defining a goal for a quality metric. Generally, the model quality may be measured using standard metrics like precision, recall, and F-score. These metrics may be used for defining the training goal, i.e., defining values of the metrics which should be achieved by the re-trained generative AI model.

According to a further embodiment, testing the quality of the re-trained generative AI model comprises testing the re-trained generative AI model with respect to the pre-defined training goal. Thus, it is tested whether the re-trained generative AI model fulfills the pre-defined training goal. If the re-trained generative AI model misses the pre-defined training goal, the method comprises adapting the re-training of the generative AI model. Thus, it may be ensured that the re-trained generative AI model is only released when the training goal is fulfilled, in case that it not the case, the parameters for training the generative AI model may be adapted till the retrained generative AI model fulfills the predefined training goal.

Adapting the re-training of the generative AI model may comprise at least one of retrieving and/or reselecting decisions regarding a target generative AI model, training data set, and/or a current version of the generative AI model, recreating and/or reconverting evaluated model artifacts (e.g., metrics of the hierarchical quality model), and redefining the training goal.

In the following, some of the terms used herein are further explained:
- Target model may refer to either the top-performing commercial models developed by other companies, such as GPT series from OpenAI and PaLM family from Google, or other open-source models released on Hugging Face platform, including the LLaMA variants, StarCoder, WizardLM, etc. They should be selected based on users' available GPU resources and computational capabilities.
- Training tasks may be the standard procedures used to train language models and the specific techniques employed to accelerate training or reduce the required computational resources. In general, the initial datasets are preprocessed beforehand into so-called prompt-completion pairs, which consist of an input, an instruction, and the expected response from the models. During training, the model learns from these natural language and/or code pairs by tokenizing them into embedding vectors and analyzing their distribution patterns, and then updating the model parameters accordingly. To speed up a normal training process, parameter-efficient fine-tuning techniques, such as low-rank adaptation, adapters, and parameter selection can be applied additionally to minimize the computational demand. Furthermore, determining an appropriate number of training epochs, i.e., how many times the model is trained on these prompt-completion pairs is critical, which should be dynamically monitored to prevent overfitting.
- Model artifacts may refer to the features or specialized knowledge covered by the raw dataset and captured by the re-trained language model. These artifacts directly illustrate the impact of the re-training process.

For re-training the generative AI model, not only the training goal itself may be defined and redefined (which be explained below in further detail), but also the information needed for retraining may be retrieved from a database or repository. This information may include a target model, training tasks (for example separate steps of the training of the generative AI model), the current version of the generative AI model which needs to be re-trained. The method may also change its decision regarding this information and may retrieve other information, especially when the training goal changes.

According to a further embodiment, the re-training comprises executing traceable training steps based on selected decisions, training tasks, and/or a current version of the generative AI model. When the training steps are traceable, the re-training of the generative AI model may be evaluated in further detail and the method may be able to change individual training steps when the re-trained generative AI model does not fulfill the training goal and/or the training goal changes.

According to a further embodiment, testing the quality comprises evaluating model artifacts created or converted by each of the executed training steps and/or evaluating test results by applying and/or simulating each trained model artifact based on a given set of quality metrics. According to this embodiment, not only the re-trained generative AI model may be tested, but also the model artifacts of the training steps may be evaluated. Thus, the method may decide at a very early stage of the re-training, i.e., during each training step, whether the training goal will be fulfilled or not. Further, the model artifacts may also be simulated, i.e., the method may adapt the re-training parameters prior to executing the re-training on the generative AI model.

According to a further embodiment, testing the quality of the re-trained generative AI model comprises splitting the available data set of the hierarchical model (e.g., of the quality model) in a training data set and a test data set and testing the model with a dataset used for a validation of the previous generative AI model and/or testing, if the quality level of the previous generative AI model is reached with the test data set of a hierarchical model based on the re-trained generative AI model.

Thus, according to this embodiment, the quality of the re-trained generative AI model may be automatically tested using two approaches:
(1) Testing of the model with the dataset used for the validation of the prior model. This may guarantee that the new model deals properly not only with new elements but also with old elements
(2) Testing, if the quality level of the previous version (the quality level may be determined as precision, recall, f-score, etc.) can be reached with the new test data set. If both tests are positive, the new re-trained generative AI model is released and made available, for example via the unchanged endpoints to clients of a system.

In both tests, two different few-shot prompting techniques for generative AI models may optionally be implemented, which are based on the embeddings and term frequency (TF-IDF) of the hierarchical model data. Using a variety of prompts in tests may enhance the stability of quality improvement during the release of the re-trained generative AI model.

As already explained above, if the evaluation result fulfills the pre-defined training goal, the retrained generative AI model may be released for further use. Further, the training goal may be raised. This means that a new training goal, for example a higher quality of the generative AI model, may be defined. This provides the advantage that the generative AI model may enhance its quality with every re-training.

According to a further embodiment, the result of testing the re-trained generative AI model is presented as distance between the predefined training goal and the outcome of the re-trained generative AI model on a user interface device. The method may further comprise, before releasing the re-trained generative AI model, outputting references to the versions of created and/or converted and evaluated model artifacts including the testing results into a training log and/or to a user interface device. By providing the result of the testing or any other information on a user interface device, a user may be able to be involved in the training of the generative AI model, for example by adjusting the training goal or by intervening with a release of the retrained generative AI model.

It should be noted that the method steps as described above may be carried out in any suitable order and/or may be carried out at least partially at the same time.

According to a further aspect, a system for maintaining the quality of a generative AI model is provided. The system comprises an application unit configured to carry out the computer-implemented method as described above and at least one repository for storing data used by the application unit, a hierarchical model (e.g., a quality model), the generative AI model and a re-trained generative AI model.

The system may further comprise a user interface device. On such a user interface device, for example a screen or the like, information with respect to the generative AI model, the re-trained generative AI model and/or the re-training and/or testing may be provided.

The embodiments and features described with reference to the method of the present invention apply mutatis mutandis to the system of the present invention.

The respective entity, e.g., the application unit, may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

According to a further aspect, the invention relates to a computer program product comprising a program code for executing the above-described method for maintaining the quality of a generative AI model when run on at least one computer.

A provisioning device stores and/or provides the computer program product.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic block diagram of a system for maintaining the quality of a generative AI model; and
- Fig. 2: shows a sequence of steps of a method for maintaining the quality of a generative AI model.

In the Figures, like reference numerals designate like or functionally equivalent elements, unless otherwise indicated.

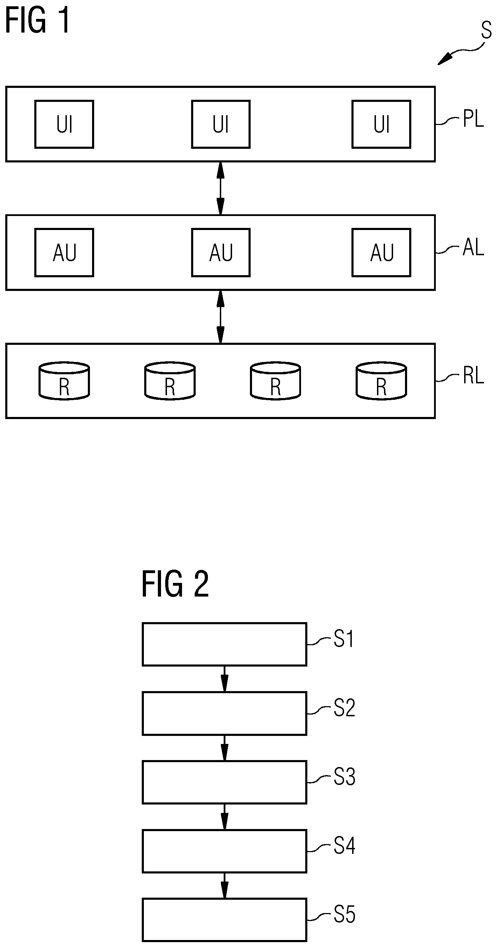

Fig. 1 shows a system 1 for maintaining the quality of a generative AI model, in particular for maintaining an optimal model quality and efficiency in a GenAl model.

The system S consists of three layers, a presentation layer PL, an application layer AL and a repository layer RL. Thus, the system S provides a 3-tier architecture, consisting of the three layers: presentation PL, application AL, and repositories RL.

The presentation layer PL may comprise one or more user interface devices Ul. These may be implemented for example as dashboards for different purposes, such as an IE-Dashboard, an H-Model Editor and Dashboard, and a GenAl-Model Dashboard. These components are responsible for presenting the user interface and interacting with the users. The IE-Dashboard for example may control the import and export of models and tools, calculates and stores change data, presents metadata about models and tools, and selects prompting (e.g., few-shot) and training techniques (LoRA, adapters, soft-tuning, etc.) for LLMs. The H-Model Editor and Dashboard may be responsible for maintaining hierarchical models and providing a dashboard for testing and recommending changes to the models. The GenAl-Model Dashboard may control the improvement of the generative AI model. 1.1 IE-Dashboard: Controls the import and export of models and tools, calculates and stores change data, and presents metadata about models and tools.

The application layer AL may include components responsible for business logic and application processing. It consists of applications, recommenders, controllers like Import&Diff, H-Model Maintainer, GenAl Maintainer, and Test System. Import&Diff may manage the import and comparison of models and tools, H-Model-Maintainer may maintain the hierarchical models and their operationalization, GenAl-Maintainer may maintain the generative AI model and its improvement, and Test System may provide a system for testing the models and tools.

These components handle tasks such as recommending changes and improvements to the models, overseeing import and differentiation, maintaining hierarchical models and generative AI models, and providing a system for testing the models and tools. For this purpose, the application layer AL may comprise one or more application units AU, for example configured as a controller, which may execute the method for maintaining the quality of a generative AI model which will be described below in further detail.

The repository layer RL may include one or more repositories R which may be used internally for storing data and artifacts. It may for example consist of repositories for a hierarchal model (H-Model), an OP-Artifactory, a generative AI model (GenAl model), and for change tracking data and scenarios related to the models and tools. The H-Model repository may be a repository for hierarchical models. OP-Artifactory repository may be a repository for tools used in operationalized models. GenAl-Model repository may be a repository for generative AI models with training and prompting techniques. The change repository may be a repository for tracking changes made to the models and tools and the scenario repository may be a repository for storing different scenarios related to the models and tools.

Overall, the architecture of the system S follows a 3-tier structure where the presentation layer PL interacts with the users, the application layer AL handles the business logic and processing, and the repository layer RL manages the storage and retrieval of data and artifacts. This architecture provides a clear separation of concerns and facilitates modularity and maintainability.

When a hierarchical model is changed, for example by adding or removing elements, updates of third parties, etc., the underlying generative AI model may need to be changed accordingly. In order to consider such changes and ensure a quality of the generative AI model at the same time, an application unit AU of the system S may execute a method for maintaining the quality of the generative AI model. Such a method is shown in Fig. 2 and will be described in the following.

In the following, a quality model management for large heterogeneous software intensive systems is used as an example. However, as already explained above, the hierarchical model may be any kind of hierarchical model such as a cost model, a value model or the like.

The assumed example or scenario consists of personas and interests. Personas may be architects that are responsible for building comprehensive and competitive quality management systems based on hierarchic quality models that allow to automatically check the adherence of software intensive systems to the quality requirements of the product or project in a DevOps style. Architects are responsible to update and integrate tools checking software and system quality and they have to massively change or adopt these hierarchical models continuously. These tasks can be subsumed under the term quality model management. Other personas may be developers that have to rely on the automatic checking of the quality of the components they develop. It has to be clear to them that the components developed by them are conformant with the quality requirements. This means that the hierarchical quality model always properly reflects the state-of-practice as well as the quality requirements of the system.

This may be ensured by the following method for automatically maintaining the quality of a generative AI model.

In a first step S1, changes of a hierarchical model being based on the generative AI model are collected. The application unit AU automatically collects in a detailed way any changes to the hierarchical quality models. These changes can be, but are not limited to:
- New metrics
- New quality attributes (hierarchical elements)
- Changed descriptions of quality attributes
- Changed descriptions of metrics
- Deleted quality attributes (hierarchical elements)
- Deleted metrics
- Changed position of a quality attribute in the hierarchy
- Changed position of a metric in the hierarchy

Any change to the hierarchical model is stored in a way that also the amount of change is reflected. This considers that the same element of a hierarchical model can be changed several times before a re-training takes place. Further, each change is classified qualitatively and quantitatively. Qualitatively: deletion of element, adding of element, changing an element description, changing the hierarchy, etc. Quantitatively: text added, text changed, text deleted, distance of the new position of the hierarchy, size of the hierarchy (number of tree elements) added, moved or deleted, etc.

In a second step S2, an impact of the change on the quality of the generative AI model, is evaluated after each change. The application AU evaluates after each change the potential impact on the overall quality of the underlying generative AI model based on metrics. Examples for such metrics are:
- number of hierarchical elements added
- number of hierarchical elements deleted
- number of hierarchical elements changed
- amount of text changes in hierarchical elements
- number of leaf elements added
- number of leaf elements deleted
- number of leaf elements changed
- amount of text changes in hierarchical elements
- Distance of changes in case of moved hierarchical or leaf elements.

Based on the classification of the change, the application unit AU calculates a probability that expresses whether the changes will have a relevant impact on the underlying generative AI model. Based on a threshold (e.g., minimum of 0.85 impact probability) the calculated impact can be used for automatically deciding to re-train the generative AI model.

In a third step S3, retraining of the generative AI model based on the collected changes and the result of the evaluation is carried out. The retraining may start automatically. As the approach for the hierarchical models is based on supervised learning, all aspects of partitioning the dataset considering the balancing of the hierarchies are done automatically. As the dataset, e.g., a quality model, is considered to be continuously maintained by architects, it reflects the actual best possible solution for capturing quality aspects in a hierarchical way.

Retraining the generative AI model comprises:
a) adjusting training meta-parameters and general parameters of the underlying generative AI model, for example applying GPU-efficient training techniques for the underlying GenAl models
b) changing the automatic split of the dataset for supervised learning (in specific very imbalanced hierarchical structures this might be necessary)
c) changing the dataset in cooperation with the hierarchical model responsible (e.g., architect for quality models) in case false data was introduced in the hierarchical model

When the training data for supervised learning is set up, it is ensured that the training data as well as the validation data properly represents the hierarchical structure of the model as well as the particularities (depth, width, density distribution) of the model.

In a further step S4, the quality of the re-trained generative AI model is tested. The test of the new, re-trained generative AI model is done automatically based on splitting of the new hierarchical model data in a training data set and a test data set. Test data set is stored as a test scenario for regression testing of future versions. The model quality is measured using standard metrics like precision, recall and F-score. The quality is automatically tested using two approaches: (1) Testing of the model with the dataset used for the validation of the prior model. This should guarantee that the new model deals properly not only with new elements but also with old elements; (2) Testing, if the quality level of the previous version (precision, recall, f-score) could be reached with the split new dataset. In both tests, two different few-shot prompting techniques for generative AI models can optionally be implemented, which are based on the embeddings and term frequency (TF-IDF) of the hierarchical model data respectively. Using a variety of prompts in tests enhances the stability of quality improvement during the iterative release of new GenAl models.

An automatic execution of the validation of the re-trained model may be done in a 2-step process: (1) calculation based on validation data for the actual generative AI model and (2) calculation based on actual validation data for the candidate generative AI model, i.e., the retrained generative AI model.

If both above tests are positive, the new, re-trained generative AI model is released in step S5 and made available via the unchanged endpoints to clients of the system S. The release of the new generative AI model may be done if both tests of function achieve at least the same quality (precision, recall, f-score). In this case, the candidate generative AI model becomes the new generative AI model and is automatically deployed and integrated in the infrastructure. The deployment process assures that the endpoints for the system can be used without changes.

The quality of the generative AI model may be for example determined as an accuracy of the hierarchical model, an efficiency of model management (of the hierarchical model) or an efficiency of generative AI model training.

In an optional step, if step S4 fails, a generative AI model expert may be involved. The generative AI model expert has the possibility to manually change parameters of the automatic mechanism:
- Training Meta-parameters and general parameters of the underlying generative AI model.
- Changing the automatic split of the dataset for supervised learning.
- Changing the dataset in cooperation with the architect. This can be necessary when accidentally false data was introduced in the hierarchical model.
- Filtering prompting examples to ensure that generative AI models demonstrate consistent performance in tests.

After making these manual adjustments the system starts over with steps S3 and S4.

Based on the above-described system and method, an optimal model quality and model efficiency may be ensured by automatically deciding when to re-train the generative AI model based on automatically collected and classified change data sets of the hierarchical model. The automatic decision considers both, efficiency of re-training and model quality.

Further, the following features and advantages may be achieved:
- automatically collecting any changes to the hierarchical models and using the change data to predict whether a re-training of the generative AI model will lead to a new generative AI model with better quality.
- achieving an optimal ratio between re-training frequency, model quality and re-training cost.
- automatically checking whether a new candidate generative AI model is capable of dealing with the old dataset (used for the actual model) and the new dataset (that lead to the candidate generative AI model) in a way that core quality levels of the generative AI model (precision, recall and f-score) are improved.
- automatically checking whether the new generative AI model demonstrates consistent performance with different prompts and instructions.
- As changes of the hierarchical model are automatically collected over time, trends of model evolution can derive best practices for model development and improvement can be identified. This leads to continuous improvement in the implementation of the workflow presentation, which is transformed into the redesign and/or reconfiguration of the user interface device III.

Thus, the described system and method are able to handle the challenges of constant change in operationalization, addition/removal of branches, update of the knowledge base, and scale and performance challenges. The system and method involve using a generative AI model knowledge base that grows with the model and its operationalization, with an application unit or controller overseeing changes and automatically deciding when to re-train the generative AI model.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

Although the present invention has been described in accordance with preferred embodiments, it is obvious for the person skilled in the art that modifications are possible in all embodiments.

It should be noted that independent of the grammatical term usage, individuals with male, female or other gender identities are included within the term.

### List of Reference

- AL: Application layer
- AU: Application unit
- PL: Presentation layer
- R: Repository
- RL: Repository layer
- UI: User interface device
- S: System
- S1-S5: method steps

## Claims

1. A computer-implemented method for maintaining the quality of a generative AI model, the method comprising:
- collecting (S1) changes of a hierarchical model being based on the generative AI model,
- evaluating (S2), after each change, the impact of the change on the quality of the generative AI model,
- re-training (S3) the generative AI model based on the collected changes and the result of the evaluation (S2),
- testing (S4) the quality of the re-trained generative AI model, and
- releasing (S5) the re-trained generative AI model when the tested quality of the generative AI model fulfills a predefined training goal.

2. The computer-implemented method according to claim 1, **characterized in that** retraining (S3) the generative AI model comprises adjusting training meta-parameters and general parameters of the generative AI model.

3. The computer-implemented method according to claim 1 or 2, **characterized in that** testing (S4) the re-trained generative AI model comprises defining the technical training goal for the re-trained generative AI model, wherein the pre-defined technical training goal is particularly quantified into a set of quality metrics.

4. The computer-implemented method according to claim 3, **characterized in that** testing (S4) the quality of the re-trained generative AI model comprises testing the re-trained generative AI model with respect to the pre-defined training goal.

5. The computer-implemented method according to claim 4, **characterized in that**, if the retrained generative AI model misses the pre-defined training goal, the method comprises adapting the re-training (S3) of the generative AI model.

6. The computer-implemented method according to claim 5, **characterized in that** adapting the re-training (S3) of the generative AI model comprises at least one of retrieving and/or reselecting decisions regarding a target model, training tasks, and/or a current version of the generative AI model, recreating and/or reconverting evaluated model artifacts, and redefining the training goal.

7. The computer-implemented method according to any one of the preceding claims, **characterized in that**, if the evaluation result fulfills the pre-defined training goal, the training goal is raised.

8. The computer-implemented method according to any one of the preceding claims, **characterized in that** the re-training comprises executing traceable training steps based on selected decisions, training tasks, and/or a current version of the generative AI model.

9. The computer-implemented method according to claim 8, **characterized in that** testing (S4) the quality comprises evaluating model artifacts created or converted by each of the executed training steps and/or evaluating test results by applying and/or simulating each trained model artifact based on a given set of quality metrics.

10. The computer-implemented method according to any one of the preceding claims, **characterized in that** testing (S4) the quality of the re-trained generative AI model comprises splitting the data of the hierarchical model in a training data set and a test data set and testing the model with a dataset used for a validation of the previous generative AI model and/or testing, if a quality level of the previous generative AI model is reached with the test data set of a hierarchical model based on the re-trained generative AI model.

11. The computer-implemented method according to claim 10, **characterized in that**, in both tests, a few-shot prompting technique for generative AI models is implemented based on the embeddings and term frequency of the hierarchical model data.

12. The computer-implemented method according to any one of the preceding claims, **characterized in that** the result of testing (S4) the re-trained generative AI model is presented as distance between the predefined training goal and the outcome of the re-trained generative AI model on a user interface device.

13. The computer-implemented method according to any one of the preceding claims, **characterized in that** the method further comprises, before releasing (S5) the re-trained generative AI model, outputting references to the versions of created and/or converted and evaluated model artifacts including the testing results into a training log and/or to a user interface device.

14. A system (S) for maintaining the quality of a generative AI model, the system (S) comprising:
- an application unit (AU) configured to carry out the computer-implemented method according to any one of the preceding claims,
- at least one repository (R) for storing data used by the application unit (AU), a hierarchical model, the generative AI model and a re-trained generative AI model.

15. The system according to claim 14, **characterized in that** the system (S) comprises a user interface device (Ul).

16. A computer program product comprising instructions which, when the program is executed by a computer, cause the computer to carry out a method according to one of the method claims.

17. A provisioning device for the computer program product according to the preceding claim, wherein the provisioning device stores and/or provides the computer program product.
